# EUROPEAN PATENT APPLICATION

(11) **EP 4 300 701 A1**
(43) Date of publication of application: **03.01.2024**
(21) Application number: 21951409.8
(22) Date of filing: 30.07.2021
(51) Int. Cl.: H01M 50/531, H01M 10/0587, H01M 10/0525

(54) **WOUND-TYPE ELECTRODE ASSEMBLY, BATTERY CELL, BATTERY AND ELECTRIC DEVICE**

(71) Applicant: Contemporary Amperex Technology Co., Limited, Fujian PRC 352100 (CN)
(72) Inventor: YU, Honggang, Ningde, Fujian 352100 (CN); SHANGGUAN, Huihui, Ningde, Fujian 352100 (CN); DU, Xinxin, Ningde, Fujian 352100 (CN); TANG, Daichun, Ningde, Fujian 352100 (CN)
(74) Representative: Gong, Jinping
(86) International application number: PCT/CN2021/109909
(87) International publication number: WO 2023/004823

(57) **Abstract**

A wound-type electrode assembly (22), a battery cell (20), a battery (100), an electric device, and a method and device (2000) for manufacturing a battery cell, which relate to the technical field of batteries. The wound-type electrode assembly (22) comprises a positive electrode sheet (223). The positive electrode sheet (223) comprises a positive electrode winding start segment (2232) without a positive electrode tab (2231) and a positive electrode winding extension segment (2233) with the positive electrode tab (2231), which are connected to each other. The positive electrode winding start segment (2232) is at least wound around once.

## Description

### Technical Field

The present application relates to the technical field of batteries, in particular to a wound electrode assembly, a battery cell, a battery, an electrical device, and a manufacturing method and device for a battery cell.

### Background Art

At present, with the rapid development of smartphones, tablet computers and electric vehicles, the application of lithium-ion batteries is also increasingly widespread, so higher requirements are also placed on lithium-ion batteries.

While people pay attention to the safety performance of batteries, they also require the lithium batteries to have better electrical performance. Lithium plating is one of the main factors affecting the electrical performance and safety performance of the batteries. Once lithium plating occurs in battery cells, it will not only reduce the electrical performance of the batteries, but also easily form dendrites with the accumulation of lithium plating quantity. The dendrites may pierce a separator, causing a short circuit in the batteries and safety hazards.

Therefore, how to effectively avoid or reduce the risk of lithium plating in batteries has become an urgent technical problem to be solved.

### Summary of the Invention

Embodiments of the present application provide a wound electrode assembly, a battery cell, a battery, an electrical device, and a manufacturing method and device for a battery cell, so as to reduce the risk of lithium plating in the electrode assembly.

In a first aspect, an embodiment of the present application provides a wound electrode assembly, including a positive electrode sheet. The positive electrode sheet includes a positive electrode winding starting section not provided with positive electrode tabs and a positive electrode winding extension section provided with the positive electrode tabs, wherein the positive electrode winding starting section and the positive electrode winding extension section are connected. The positive electrode winding starting section is wound at least one circle.

In the above technical solution, the positive electrode winding starting section is not provided with the positive electrode tabs. After the positive electrode sheet is wound to form the electrode assembly, the positive electrode winding starting section has no tab for directly guiding out currents in the positive electrode winding starting section, which is equivalent to increasing an internal resistance corresponding to the positive electrode winding starting section. In the charging process, charging polarization of the part with the larger internal resistance of the positive electrode sheet will be greater than that of the part with the smaller internal resistance of the positive electrode sheet, and thus at the time of full charging, the part with the smaller internal resistance of the positive electrode sheet reaches an upper limit voltage, while the positive electrode winding starting section not provided with the positive electrode tabs actually does not reach the upper limit voltage. Compared with the part with the smaller internal resistance of the positive electrode sheet, it is equivalent to reducing the voltage of the positive electrode winding starting section to increase the difficulty of ions separating from the positive electrode winding starting section, thereby reducing the number of ions separated from the positive electrode winding starting section and lowering the possibility of lithium plating of the electrode assembly.

In some embodiments of the first aspect of the present application, a length of the positive electrode winding starting section accounts for 5%-30% of a total length of the positive electrode sheet.

In the above technical solution, the length of the positive electrode winding starting section accounts for 5%-30% of the total length of the positive electrode sheet. When the length of the positive electrode winding starting section is less than 5% of the total length, the increase of the internal resistance of the positive electrode winding starting section is not obvious, the voltage corresponding to the positive electrode winding starting section cannot be significantly reduced, and the problem of lithium plating in a bending portion of the electrode assembly cannot be significantly improved. When the length of the positive electrode winding starting section accounts for 30% of the total length of the positive electrode sheet, a temperature rise of the first positive electrode tab along a winding direction of the positive electrode sheet will be too large, causing other risks such as thermal runaway.

In some embodiments of the first aspect of the present application, the length of the positive electrode winding starting section accounts for 10%-25% of the total length of the positive electrode sheet.

In the above technical solution, the length of the positive electrode winding starting section accounts for 10%-25% of the total length of the positive electrode sheet, which can not only significantly relieve the lithium plating problem of the electrode assembly, but also reduce the risk that the temperature rise of the first positive electrode tab along the winding direction of the positive electrode sheet is too large.

In some embodiments of the first aspect of the present application, the length of the positive electrode winding starting section accounts for 15%-20% of the total length of the positive electrode sheet.

In the above technical solution, the length of the positive electrode winding starting section accounts for 15%-20% of the total length of the positive electrode sheet, which can not only significantly relieve the lithium plating problem of the electrode assembly, but also reduce the risk that the temperature rise of the first positive electrode tab along the winding direction of the positive electrode sheet is too large.

In some embodiments of the first aspect of the present application, the positive electrode winding extension section is provided with a plurality of positive electrode tabs, from a positive electrode winding start end to a positive electrode winding finish end, and the area of the first positive electrode tab of the positive electrode winding extension section is larger than the area of the remaining positive electrode tabs of the positive electrode winding extension section.

In the above technical solution, from the positive electrode winding start end to the positive electrode winding finish end, the first positive electrode tab of the positive electrode winding extension section will withstand the temperature rise caused by the positive electrode winding starting section, and the fact that the area of the first positive electrode tab of the positive electrode winding extension section being larger than the area of the remaining positive electrode tabs of the positive electrode winding extension section is capable of effectively reducing the temperature rise of the positive electrode winding starting section and ensure the consistency of the temperature rise of the positive electrode winding starting section and the positive electrode winding extension section as much as possible.

In some embodiments of the first aspect of the present application, from the positive electrode winding start end to the positive electrode winding finish end, the areas of the plurality of the positive electrode tabs gradually decrease.

In the above technical solution, from the positive electrode winding start end to the positive electrode winding finish end, the areas of the plurality of positive electrode tabs gradually decrease, so that the plurality of positive electrode tabs do not overlap completely, but are staggered in the width direction of the positive electrode tabs so as to ensure that each positive electrode tab has an exposed area, thereby improving the heat dissipation capability at the positive electrode tabs.

In some embodiments of the first aspect of the present application, the wound electrode assembly further includes a negative electrode sheet, and the areas of the positive electrode tabs are larger than the areas of negative electrode tabs of the negative electrode sheet.

In the above technical solution, since the positive electrode winding starting section is not provided with the positive electrode tabs, the temperature rise of the positive electrode sheet will be greater than that of the negative electrode sheet, the heat dissipation capability of the positive electrode sheet is smaller than that of the negative electrode sheet, and the areas of the positive electrode tabs of the positive electrode sheet are larger than the areas of the negative electrode tabs of the negative electrode sheet, which is capable of effectively reducing the temperature rise of the positive electrode sheet and effectively improve the heat dissipation capability of the positive electrode sheet.

In some embodiments of the first aspect of the present application, the positive electrode winding extension section includes a positive electrode winding middle section and a positive electrode winding finishing section, the positive electrode winding middle section is connected between the positive electrode winding starting section and the positive electrode winding finishing section, the positive electrode winding middle section is wound at least one circle, and one positive electrode tab is arranged on each layer of the positive electrode winding middle section in each circle.

In the above technical solution, one positive electrode tab is arranged on each layer of the positive electrode winding middle section in each circle, which can increase an internal resistance difference between the positive electrode winding starting section and the positive electrode winding middle section, so that a voltage difference between the positive electrode winding starting section and the positive electrode winding middle section may be increased, then the difficulty of ion separation in the positive electrode winding starting section is increased, and the risk of lithium plating at the bending portion of the positive electrode winding starting section is further lowered.

In some embodiments of the first aspect of the present application, the positive electrode winding extension section includes the positive electrode winding middle section and the positive electrode winding finishing section, the positive electrode winding middle section is connected between the positive electrode winding starting section and the positive electrode winding finishing section, the positive electrode winding finishing section is wound at least one circle, and one positive electrode tab is arranged on each circle of the positive electrode winding finishing section, or the positive electrode winding finishing section is not provided with the positive electrode tabs.

In the above technical solution, since binding force of a negative electrode winding finishing section and the positive electrode winding finishing section is relatively small, after the electrode assembly is repeatedly expanded and contracted, a distance between the negative electrode winding finishing section and the positive electrode winding finishing section is large relative to a distance between other circles, which is prone to causing ions in the positive electrode winding finishing section failing to reach the negative electrode winding finishing section, resulting in lithium plating. One positive electrode tab is arranged on each circle of the positive electrode winding finishing section or the positive electrode winding finishing section is not provided with the positive electrode tabs, so that it is capable of increasing the difficulty of ion separation at the positive electrode winding finishing section, thereby reducing the number of ions separated from the positive electrode winding finishing section and reducing the risk of lithium plating in the electrode assembly.

In some embodiments of the first aspect of the present application, the wound electrode assembly further includes the negative electrode sheet, and the number of the positive electrode tabs of the positive electrode sheet is less than the number of the negative electrode tabs of the negative electrode sheet.

In the above technical solution, the total number of the negative electrode tabs is greater than the total number of the positive electrode tabs, so the internal resistance of the negative electrode sheet is smaller than that of the positive electrode sheet, ensuring that the ion receiving capability of the negative electrode sheet is capable of being better than the ion separation capability of the positive electrode, and thus be capable of more effectively relieving the lithium plating problem.

In some embodiments of the first aspect of the present application, the positive electrode winding extension section includes the positive electrode winding middle section and the positive electrode winding finishing section; the wound electrode assembly further includes the negative electrode sheet, and the negative electrode sheet includes a negative electrode winding starting section arranged corresponding to the positive electrode winding starting section, the negative electrode winding middle section arranged corresponding to the positive electrode winding middle section, and the negative electrode winding finishing section arranged corresponding to the positive electrode winding finishing section; the negative electrode winding starting section is wound at least one circle, and one negative electrode tab is arranged on each layer of the negative electrode winding starting section of each circle; and/or, the negative electrode winding middle section is wound multiple circles, and one negative electrode tab is arranged on each circle of the negative electrode winding middle section; and/or, the negative electrode winding finishing section is wound at least one circle, and one negative electrode tab is arranged on each circle of the negative electrode winding finishing section.

In the above technical solution, the positive electrode sheet of the innermost circle is arranged on the outer periphery of the negative electrode sheet of the innermost circle, then the length of the positive electrode sheet of the innermost circle along the winding direction is greater than the length of the negative electrode sheet of the innermost circle along the winding direction, and then the number of ions that is capable of being separated from the positive electrode sheet of the innermost circle is greater than the number of ions that is capable of being received by the negative electrode sheet of the innermost circle, which is prone to causing lithium plating. One negative electrode tab is arranged on each layer of each circle of the negative electrode winding starting section, so that it is capable of reducing the internal resistance of the negative electrode winding finishing section, improving the ion receiving capability of the negative electrode winding starting section, and lowering the risk of lithium plating of the electrode assembly. One negative electrode tab is arranged on each circle of the negative electrode winding middle section, which is capable of improving the ion receiving capability of the negative electrode winding middle section and reducing the risk of lithium plating of the electrode assembly. The distance between the negative electrode winding finishing section and the positive electrode winding finishing section is large relative to the distance between other layers of circles, which is prone to causing that ions in the positive electrode winding finishing section fail to reach the negative electrode winding finishing section, resulting in lithium plating. One negative electrode tab is arranged on each circle of the negative electrode winding finishing section, so that the internal resistance of the negative electrode winding finishing section is small, which is capable of improving the ion receiving capability of the negative electrode winding middle section and reducing the risk of lithium plating of the electrode assembly.

In some embodiments of the first aspect of the present application, the positive electrode winding starting section is provided with a heat dissipation structure.

In the above technical solution, since the positive electrode winding starting section is not provided with the positive electrode tabs, the internal resistance of the positive electrode winding starting section is larger than that in the case where the positive electrode winding starting section is provided with the positive electrode tabs, the temperature rise of the positive electrode winding starting section is relatively large, and the arrangement of the heat dissipation structure in the positive electrode winding starting section is capable of improving the heat dissipation capability of the positive electrode winding starting section.

In a second aspect, an embodiment of the present application provides a battery cell, including a shell and the wound electrode assembly provided by the embodiment of the first aspect, and the shell has an accommodating cavity; and the wound electrode assembly is accommodated in the accommodating cavity.

In the above technical solution, a positive electrode winding starting section of a positive electrode sheet of the electrode assembly is not provided with positive electrode tabs, which is equivalent to increasing an internal resistance corresponding to the positive electrode winding starting section, such that the difficulty that ions are separated from the positive electrode winding starting section is increased, the number of ions separated from the positive electrode winding starting section is reduced, and the possibility of lithium plating of the electrode assembly is reduced.

In a third aspect, an embodiment of the present application provides a battery, including a box body and the battery cell provided by the embodiment of the second aspect. The battery cell is accommodated in the box body.

In the above technical solution, since a positive electrode winding starting section is not provided with positive electrode tabs, which is equivalent to increasing an internal resistance corresponding to the positive electrode winding starting section, the possibility of lithium plating of an electrode assembly is small, and the safety performance of the battery is higher.

In a fourth aspect, an embodiment of the present application provides an electrical device, including the battery cell provided by some embodiments of the second aspect.

In the above technical solution, the possibility of lithium plating in the battery cell is small, the safety of the battery cell is high, and thus the electrical safety of the electrical device is improved.

In a fifth aspect, an embodiment of the present application provides a manufacturing method of a wound electrode assembly, including:
providing a positive electrode sheet, the positive electrode sheet comprising a positive electrode winding starting section not provided with positive electrode tabs and a positive electrode winding extension section provided with the positive electrode tabs, wherein the positive electrode winding starting section and the positive electrode winding extension section are connected; and
arranging the positive electrode sheet in a wound manner and winding the positive electrode winding starting section at least one circle.

In the above technical solution, the positive electrode winding starting section is not provided with the positive electrode tabs, after the positive electrode sheet is wound to form an electrode assembly, it is equivalent to increasing an internal resistance corresponding to the positive electrode winding starting section, such that the difficulty that ions are separated from the positive electrode winding starting section is increased, the number of ions separated from the positive electrode winding starting section is reduced, and the possibility of lithium plating of the electrode assembly is reduced.

In a sixth aspect, an embodiment of the present application provides a manufacturing apparatus of a wound electrode assembly, including a providing device and an assembling device. The providing device is configured to provide a positive electrode sheet, the positive electrode sheet comprising a positive electrode winding starting section not provided with positive electrode tabs and a positive electrode winding extension section provided with the positive electrode tabs, wherein the positive electrode winding starting section and the positive electrode winding extension section are connected; and the assembling device is configured to wind the positive electrode sheet and wind the positive electrode winding starting section at least one circle.

In the above technical solution, the positive electrode winding starting section is not provided with the positive electrode tabs, after the positive electrode sheet is wound to form an electrode assembly, it is equivalent to increasing an internal resistance corresponding to the positive electrode winding starting section, such that the difficulty that ions are separated from the positive electrode winding starting section is increased, the number of ions separated from the positive electrode winding starting section is reduced, and the possibility of lithium plating of the electrode assembly is reduced.

### Description of Drawings

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural view of a vehicle provided by some embodiments of the present application;
Fig. 2 is a schematic structural view of a battery provided by some embodiments of the present application;
Fig. 3 is a schematic view of connecting a plurality of battery cells through a converging portion provided by some embodiments of the present application;
Fig. 4 is an exploded view of a battery cell provided by some embodiments of the present application;
Fig. 5 is a schematic structural view of a wound electrode assembly provided by some embodiments of the present application;
Fig. 6 is a schematic structural view of a wound electrode assembly provided by some other embodiments of the present application;
Fig. 7 is a schematic structural view of a wound electrode assembly provided by some other embodiments of the present application;
Fig. 8 is a schematic structural view of a wound electrode assembly provided by yet some embodiments of the present application;
Fig. 9 is a schematic structural view of an electrode assembly provided by yet some embodiments of the present application;
Fig. 10 is a schematic structural view of an electrode assembly provided by yet some embodiments of the present application;
Fig. 11 is a schematic structural view of an expanded positive electrode sheet provided by some embodiments of the present application;
Fig. 12 is a schematic structural view of an expanded positive electrode sheet provided by some other embodiments of the present application;
Fig. 13 is a schematic structural view of an expanded positive electrode sheet provided by yet some embodiments of the present application;
Fig. 14 is a schematic structural view of laminated positive electrode tabs provided by some embodiments of the present application;
Fig. 15 is an enlarged view of position I in Fig. 14;
Fig. 16 is a schematic structural view of a positive electrode sheet provided by some other embodiments of the present application;
Fig. 17 is a flowchart of a manufacturing method of a wound electrode assembly provided by some embodiments of the present application;
Fig. 18 is a flowchart of a manufacturing apparatus of a wound electrode assembly provided by some embodiments of the present application.

Reference numerals: 1000-vehicle; 100-battery; 10-box body; 11-accommodating space; 12-first portion; 13-second portion; 20-battery cell; 21-shell; 211-opening; 22-electrode assembly; 221-straight portion; 222-bending portion; 223-positive electrode sheet; 2231-positive electrode tab; 2231a-first positive electrode tab; 2231b-second positive electrode tab; 2231c-third positive electrode tab; 2232-positive electrode winding starting section; 22321-heat dissipation structure; 2233-positive electrode winding extension section; 22331-positive electrode winding middle section; 22332-positive electrode winding finishing section; 2234-positive electrode start end; 2235-positive electrode winding finish end; 2236-first connection position; 2237-second connection position; 224-negative electrode sheet; 2241-negative electrode winding starting section; 2242-negative electrode winding middle section; 2243-negative electrode winding finishing section; 2244-negative electrode tab; 2244a-first negative electrode tab; 2244b-second negative electrode tab; 2244c-third negative electrode tab; 2245-negative electrode start end; 2246-negative electrode winding finish end; 2247-third connection position; 2248-fourth connection position; 225-separator; 23-end cap assembly; 231-end cap; 232-first electrode terminal; 233-second electrode terminal; 234-pressure relief mechanism; 30-converging portion; 200-controller; 300-motor; 2000-manufacturing apparatus of wound electrode assembly; 2100-providing device; 2200-assembling device; A-width direction of electrode assembly; B-winding direction; C-thickness direction of electrode assembly; and P-thickness center plane.

### Detailed Description

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are a part of the embodiments of the present application rather than all the embodiments. The assembly of the examples of the present application generally described and illustrated in the drawings herein can be arranged and designed in a variety of different configurations.

Thus, the following detailed description of the embodiments of the present application provided in the accompanying drawings below is not intended to limit the scope of the present application as claimed, but is merely representative of selected embodiments of the present application. Based on the embodiments in the present application, all other embodiments obtained by those of ordinary skill in the art without creative effort fall within the protection scope of the present application.

It should be noted that in case of no conflicts, the features of the embodiments in the present application may be combined with each other.

It should be noted that: similar numerals and letters represent similar items in the following drawings. Therefore, once an item is defined in a drawing, it does not need to be further defined and explained in subsequent drawings.

In the description of the embodiments of the present application, it should be noted that indicated directional or positional relationships are based on directional or positional relationships shown in the accompanying drawings, or directional or positional relationships commonly adopted when a product of the present application is used, or directional or positional relationships commonly understood by those skilled in the art, are only intended for ease of description of the present application and simplified description, rather than indicating or implying that referred devices or elements must have particular directions and be constructed and operated in the particular directions, thus cannot be understood as limitations of the present application. In addition, the terms "first", "second" and "third" are only used to distinguish descriptions, and cannot be understood as indicating or implying relative importance.

The appearance of "plurality" in the present application refers to two or more (including two).

In the present application, a battery cell may include a lithium-ion secondary battery, a lithium-ion primary battery, a lithium-sulfur battery, a sodium/lithium-ion battery, a sodium-ion battery, a magnesium-ion battery, or the like, without limitation in the embodiments of the present application. The battery cell may be cylindrical, flat, cuboid, or in other shapes, which is also not limited in the embodiments of the present application. The battery cell is generally divided into three types according to encapsulating manners: a cylindrical battery cell, a square battery cell, and a pouch cell, which are not limited in the embodiments of the present application.

The battery mentioned in the examples of the present application refers to a single physical module including one or more battery cells to provide a higher voltage and capacity. For example, the battery mentioned in the present application may include a battery module, a battery pack, or the like. The battery generally includes a box body for encapsulating one or more battery cells. The box body can prevent liquids or other foreign matters from affecting charging or discharging of the battery cells.

The battery cell includes an electrode assembly and an electrolyte solution, the electrode assembly being composed of a positive electrode sheet, a negative electrode sheet and a separator. The battery cell works mainly relying on the movement of metal ions between the positive electrode sheet and the negative electrode sheet. The positive electrode sheet includes a positive electrode current collector and a positive electrode active material layer, wherein the positive electrode active material layer coats a surface of the positive electrode current collector, the part of the positive electrode current collector not coated with the positive electrode active material layer protrudes from the part of the positive electrode current collector already coated with the positive electrode active material layer, and the part of the positive electrode current collector not coated with the positive electrode active material layer serves as a positive electrode tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode sheet comprises a negative electrode current collector and a negative electrode active material layer, wherein the negative electrode active material layer is coated on a surface of the negative electrode current collector, the part of the negative electrode current collector not coated with the negative electrode active material layer protrudes from the part of the negative electrode current collector already coated with the negative electrode active material layer, and the part of the negative electrode current collector not coated with the negative electrode active material layer serves as a negative electrode tab. The material of the negative electrode current collector may be copper, and the negative electrode active material may be carbon, silicon, or the like. In order to ensure that no fusing occurs when a large current passes, there are a plurality of positive electrode tabs which are laminated together, and there are a plurality of negative electrode tabs which are laminated together. The separator may be made from polypropylene (PP), polyethylene (PE), or the like. In the embodiments of the present application, the electrode assembly is of a wound structure.

Many design factors, such as energy density, cycle life, discharge capacity, charge-discharge rate and other performance parameters, should be considered in the development of the battery technology. In addition, the safety of the battery also needs to be taken into account. Lithium plating is one of the main factors affecting the electrical performance and safety performance of the battery. Once lithium plating occurs, it will not only reduce the electrical performance of the battery, but also easily form dendrites with the accumulation of lithium plating quantity. The dendrites may pierce the separator, causing a short circuit in the battery and safety hazards. There are many reasons for lithium plating.

The inventors found that, on the one hand, for the wound electrode assembly, in a bending portion, along the winding direction, the length of the positive electrode active material on the side of the positive electrode sheet close to the winding center is greater than the length of the negative electrode active material on the side, away from the winding center, of the negative electrode sheet on the inner side of the positive electrode sheet, and thus the number of ions that is capable of being separated from the positive electrode sheet is greater than the number of ions that the negative electrode sheet is capable of receiving, which is prone to causing lithium plating; and on the other hand, due to the problem of a manufacturing process of the wound electrode assembly, in the bending portion of the wound electrode assembly, a gap between the positive electrode sheet and the negative electrode sheet on the inner circle is large, which is prone to lithium plating. The internal resistance of the positive electrode sheet has an important influence on the ion separation capability of the positive electrode sheet. The greater the internal resistance of the positive electrode sheet, the weaker the ion separation capability on the positive electrode sheet, the more difficult of separation of ions from the positive electrode sheet, and the smaller the risk of lithium plating. On the contrary, the smaller the internal resistance of the positive electrode sheet, the stronger the ion separation capability on the positive electrode sheet, the less difficult of separation of ions from the positive electrode sheet, and the greater the risk of lithium plating. The internal resistance of the negative electrode sheet has an important influence on the ion receiving capability of the negative electrode sheet. The greater the internal resistance of the negative electrode sheet, the weaker the ion receiving capability of the negative electrode sheet, and the greater the risk of lithium plating. On the contrary, the smaller the internal resistance of the negative electrode sheet, the stronger the ion receiving capability of the negative electrode sheet, and the smaller the risk of lithium plating.

In view of this, the embodiments of the present application provide a technical solution, a positive electrode winding starting section of the positive electrode sheet is not provided with positive electrode tabs, and thus the internal resistance of the positive electrode winding starting section is increased, such that the difficulty that ions are separated from the positive electrode winding starting section is increased, the number of ions separated from the positive electrode winding starting section is reduced, and the possibility of lithium plating of the electrode assembly is lowered.

The technical solution described in the embodiments of the present application is suitable for a battery, and an electrical device using a battery.

The electrical device may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The embodiments of the present application do not impose special limitations on the above electrical device.

For convenience of explanation, the following embodiments are described by taking an example that the electrical device is a vehicle.

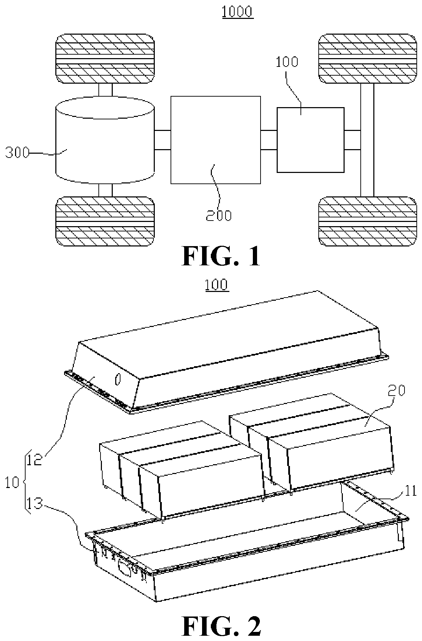

Referring to Fig. 1, it is a schematic structural view of a vehicle 1000 provided by some embodiments of the present application. The interior of the vehicle 1000 is provided with a battery 100, and the battery 100 may be provided at the bottom or head or tail of the vehicle 1000. The battery 100 can be used to power the vehicle 1000, for example, the battery 100 can serve as an operating power source for the vehicle 1000.

The vehicle 1000 may further include a controller 200 and a motor 300, wherein the controller 200 is used to control the battery 100 to power the motor 300, for example, for the operating power demand when the vehicle 1000 is starting, navigating and driving.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to Fig. 2, it is a schematic structural view of a battery 100 provided by some embodiments of the present application. The battery 100 includes a box body 10 and a battery cell 20, and the battery cell 20 is accommodated within the box body 10.

The box body 10 is used to provide an accommodating space 11 for the battery cell 20. In some embodiments, the box body 10 may include a first portion 12 and a second portion 13, the first portion 12 and the second portion 13 being covered to each other to define the accommodating space 11 for accommodating the battery cell 20. Of course, a junction of the first portion 12 and the second portion 13 may be sealed by a sealing member (not shown in the figure), which may be a sealing ring, a sealant, or the like.

The first portion 12 and the second portion 13 may be in a variety of shapes, such as a rectangular parallelepiped, a cylinder, or the like. The first portion 12 may be of a hollow structure with one side open, the second portion 13 may also be of a hollow structure with one side open, and the opening side of the second portion 13 covers the opening side of the first portion 12, so as to form the box body 10 with the accommodating space 11. Of course, the first portion 12 may be of a hollow structure with one side open, the second portion 13 may be of a plate-like structure, and the second portion 13 covers the opening side of the first portion 12 to form the box body 10 with the accommodating space 11.

There may be one or more battery cells 20 in the battery 100. If there are a plurality of battery cells 20, the plurality of battery cells 20 can be connected in series or parallel or in a parallel-series connection, wherein the parallel-series connection means that the plurality of battery cells 20 are connected both in series and in parallel. The plurality of battery cells 20 may be directly connected in series or in parallel or in a combination thereof, and then an entirety composed of the plurality of battery cells 20 may be accommodated in the box body 10; of course, the plurality of battery cells 20 may also be connected in series or in parallel or in a combination thereof to form a battery module, and then a plurality of battery modules are connected in series or in parallel or in a parallel-series connection to form an entirety which is accommodated in the box body 10. The battery cell 20 may be in the shape of a cylinder, a flat body, a cuboid or others. Fig. 2 exemplarily shows the case where the battery cell 20 is a cube.

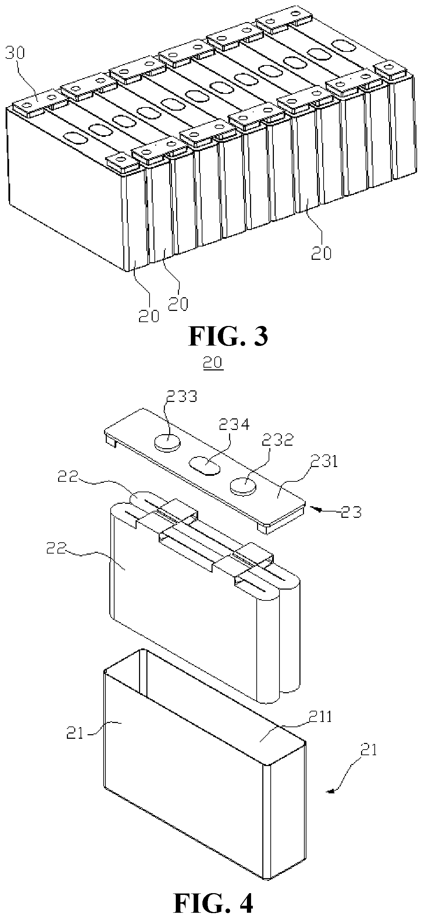

Referring to Fig. 3, in some embodiments, the battery 100 may also include a converging portion 30, and the plurality of battery cells 20 may be electrically connected through the converging portion 30, so as to realize series, parallel or parallel-series connection of the plurality of battery cells 20.

Referring to Fig. 4, the battery cell 20 may include a shell 21, an electrode assembly 22 and an end cap assembly 23. The shell 21 has an opening 211 and an accommodating cavity (not shown in the figure). The electrode assembly 22 is accommodated in the accommodating cavity, and the end cap assembly 23 is used to cover the opening 211.

The shell 21 may be in a variety of shapes, such as a cylinder, a rectangular parallelepiped, or the like. The shape of the shell 21 may be determined according to the specific shape of the electrode assembly 22. For example, if the electrode assembly 22 is of a cylindrical structure, the shell 21 may adopt a cylindrical structure; and if the electrode assembly 22 is of a rectangular parallelepiped structure, the shell 21 may also adopt a rectangular parallelepiped structure. Fig. 4 exemplarily shows the case where the shell 21 and the electrode assembly 22 are rectangular parallelepipeds.

The shell 21 may also be made of various materials, such as copper, iron, aluminum, stainless steel, aluminum alloy, or the like, which is not particularly limited in the embodiments of the present application.

The end cap assembly 23 is used to cover the opening 211 of the shell 21 to form a closed accommodating cavity (not shown in the figure), and the accommodating cavity is used to accommodate the electrode assembly 22. The accommodating space 11 is also used for accommodating an electrolyte, such as an electrolyte solution. The end cap assembly 23 is used as a component for outputting electric energy of the electrode assembly 22. Electrode terminals in the end cap assembly 23 are used for electrical connection with the electrode assembly 22, that is, the electrode terminals are electrically connected with the tabs of the electrode assembly 22. For example, the electrode terminals are connected with the tabs through adapters (not shown in the figure) to realize the electrical connection between the electrode terminals and the tabs.

It is to be noted that the shell 21 may have one or two openings 211. If there is one opening 211 of the shell 21, there may be one end cap assembly 23, two electrode terminals may be arranged in the end cap assembly 23, the two electrode terminals are respectively used for electric connection with a positive electrode tab 2231 and a negative electrode tab 2244 of the electrode assembly 22, and the two electrode terminals in the end cap assembly 23 are respectively a positive electrode terminal and a negative electrode terminal. If there are two openings 211 of the shell 21, for example, the two openings 211 are arranged on two opposite sides of the shell 21, there may be two end cap assemblies 23, and the two end cap assemblies 23 respectively cover the two openings 211 of the shell 21. In this case, the electrode terminal in one end cap assembly 23 may be a positive electrode terminal for electric connection with the positive electrode tab 2231 of the electrode assembly 22; and the electrode terminal in the other end cap assembly 23 may be a negative electrode terminal for electrical connection with the negative electrode sheet 224 of the electrode assembly 22.

The end cap assembly 23 may include an end cap 231, a first electrode terminal 232, a second electrode terminal 233 and a pressure relief mechanism 234.

The first electrode terminal 232 is mounted on the end cap 231; and the second electrode terminal 233 is mounted on the end cap 231. The pressure relief mechanism 234 is disposed on the end cap 231, the pressure relief mechanism 234 is located between the first electrode terminal 232 and the second electrode terminal 233, and the pressure relief mechanism 234 is configured to be actuated when internal pressure or temperature of the battery cell 20 reaches a threshold value to release the pressure inside the battery cell 20.

The end cap 231 in the end cap assembly 23 is configured to cover the opening 211 of the shell 21. The end cap 231 may be in a variety of shapes, such as a circle, a rectangle, or the like. The shape of the end cap 231 depends on the shape of the shell 21. If the shell 21 is of a cylindrical structure, a circular end cap 231 may be selected; and if the shell 21 is a rectangular parallelepiped structure, a rectangular end cap 231 may be selected.

In the embodiments of the present application, the related structure is described by using the rectangular-parallelepiped wound electrode assembly 22.

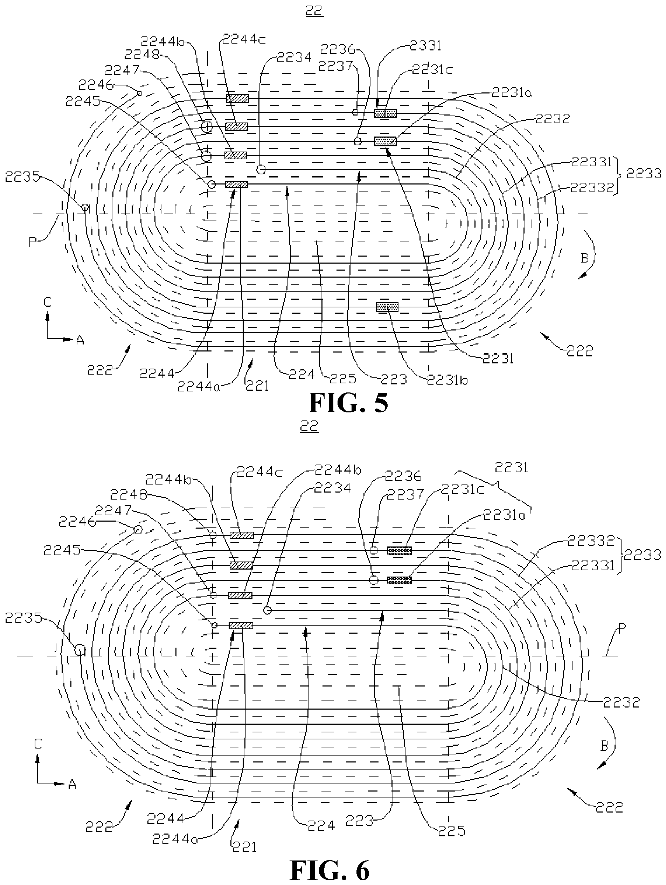

As shown in Fig. 5, the electrode assembly 22 has a straight portion 221 and two oppositely arranged bending portions 222. Along the width direction A of the electrode assembly, two ends of the straight portion 221 are respectively connected to the two bending portions 222.

In some embodiments, the electrode assembly 22 includes a positive electrode sheet 223, and the positive electrode sheet 223 includes a positive electrode winding starting section 2232 not provided with positive electrode tabs 2231 and a positive electrode winding extension section 2233 provided with the positive electrode tabs 2231, wherein the positive electrode winding starting section and the positive electrode winding extension section are connected. The positive electrode winding starting section 2232 is wound at least one circle.

Each section of the positive electrode sheet 223 is equivalent to an internal resistance, and each positive electrode tab 2231 is equivalent to connecting the internal resistances corresponding to the two sections of the positive electrode sheet 223 in parallel, and the internal resistance of a parallel circuit is smaller than the internal resistance of a series circuit. Each section of positive electrode sheet 223 may be understood as, if each circle of the positive electrode sheet 223 has one tab, then each circle of the positive electrode sheet 223 is equivalent to an internal resistance, or, if each circle of the positive electrode sheet 223 has one tab for each layer, then each layer of the positive electrode sheet 223 is equivalent to an internal resistance. The positive electrode winding starting section 2232 is not provided with the positive electrode tabs 2231, and the positive electrode winding extension section 2233 is provided with the positive electrode tabs 2231. After the positive electrode sheet 223 is wound to form the electrode assembly 22, the positive electrode winding starting section 2232 has no tab for directly guiding out currents in the positive electrode winding starting section 2232, which is equivalent to increasing the internal resistance corresponding to the positive electrode winding starting section 2232. In the charging process, charging polarization of the part with the larger internal resistance of the positive electrode sheet 223 will be greater than that of the part with the smaller internal resistance of the positive electrode sheet 223, and thus at the time of full charging, the part with the smaller internal resistance of the positive electrode sheet 223 reaches an upper limit voltage, while the positive electrode winding starting section 2232 not provided with the positive electrode tabs 2231 actually does not reach the upper limit voltage. Compared with the part with the smaller internal resistance of the positive electrode sheet 223, it is equivalent to lowering the voltage of the positive electrode winding starting section 2232 to increase the difficulty of ions separating from the positive electrode winding starting section 2232, thereby reducing the number of ions separated from the positive electrode winding starting section 2232 and lowering the possibility of lithium plating of the electrode assembly 22. In other words, it makes at least the internal resistance of the positive electrode sheet 223 of the innermost circle larger, and is capable of improving the ion separation capability of the positive electrode sheet 223 of the innermost circle, lowering the risk of lithium plating at the bending portions 222, and thus lowering the risk of lithium plating of the electrode assembly 22.

The positive electrode sheet 223 has a positive electrode start end 2234 and a positive electrode winding finish end 2235, the positive electrode start end 2234 is the starting position of winding of the positive electrode sheet 223, the positive electrode start end 2234 is located at the positive electrode winding starting section 2232, the positive electrode winding finish end 2235 is the ending position of winding of the positive electrode sheet 223, and the positive electrode winding finish end 2235 is located at the positive electrode winding extension section 2233. After the positive electrode sheet 223 is wound, the positive electrode winding starting section 2232 is closer to the winding center axis than the positive electrode winding extension section 2233. The positive electrode winding starting section 2232 also has a first connection end, the positive electrode winding extension section 2233 also has a second connection end, and the positive electrode winding starting section 2232 is connected with the second connection end of the positive electrode winding extension section 2233 through the first connection end to form a first connection position 2236 of the positive electrode sheet 223.

The positive electrode winding starting section 2232 is a part extending from the positive electrode start end 2234 along the winding direction B, and can extend as far as to the first positive electrode tab 2231 of the positive electrode sheet 223. Along the winding direction B, the first positive electrode tab 2231 of the positive electrode sheet 223 is completely located in the positive electrode winding extension section 2233. Along the winding direction B, the first positive electrode tab 2231 of the positive electrode sheet 223 refers to the first positive electrode tab 2231 encountered along the winding direction B. For convenience of description in the text and illustration in the figures, the first positive electrode tab 2231 of the positive electrode sheet 223 encountered along the winding direction B is defined as the first positive electrode tab 2231a.

Continuing to refer to Fig. 5, in some embodiments, the positive electrode winding extension section 2233 includes a positive electrode winding middle section 22331 and a positive electrode winding finishing section 22332, the positive electrode winding middle section 22331 is connected between the positive electrode winding starting section 2232 and the positive electrode winding finishing section 22332, the positive electrode winding middle section 22331 is wound at least one circle, and one positive electrode tab 2231 is arranged on each layer of the positive electrode winding middle section 22331 in each circle. The first positive electrode tab 2231a is located at the positive electrode winding middle section 22331. One positive electrode tab 2231 is arranged on each layer of the positive electrode winding middle section 22331 in each circle, and one positive electrode tab 2231 is arranged on each layer of the positive electrode winding middle section 22331 in each circle, which can increase an internal resistance difference between the positive electrode winding starting section 2232 and the positive electrode winding middle section 22331, so that a voltage difference between the positive electrode winding starting section 2232 and the positive electrode winding middle section 22331 may be increased, then the difficulty of ion separation in the positive electrode winding starting section 2232 is increased, and the risk of lithium plating at the bending portions 222 of the positive electrode winding starting section 2232 is further lowered.

The second connection end of the positive electrode winding extension section 2233 is located at the positive electrode winding middle section 22331. The positive electrode winding extension section 2233 also includes a third connection end and a fourth connection end. The third connection end is located at the positive electrode winding middle section 22331. The fourth connection end is located at the positive electrode winding finishing section 22332. The positive electrode winding middle section 22331 is connected with the first connection end of the positive electrode winding starting section 2232 through the second connection end to form the first connection position 2236 of the positive electrode sheet 223, and the positive electrode winding middle section 22331 is connected with the fourth connection end of the positive electrode winding finishing section through the third connection end to form a second connection position 2237 of the positive electrode sheet 223.

One circle of the positive electrode sheet 223 means that from the positive electrode start end 2234, the positive electrode sheet is wound around the winding axis along the winding direction B by 360° as a circle. One circle includes two layers, and the division of the two layers may be bounded by a thickness center plane P, which divides any circle of the positive electrode sheet 223 into two layers located on both sides thereof. The winding axis of the electrode assembly 22 is parallel to the thickness center plane P, and the thickness direction C of the electrode assembly is perpendicular to the thickness center plane P. One positive electrode tab 2231 is arranged on each layer of the positive electrode winding middle section 22331 in each circle, if the positive electrode winding middle section 22331 is wound to form a plurality of complete circles, the number of the positive electrode tabs 2231 of the positive electrode winding middle section 22331 is an even number, and if the positive electrode winding middle section 22331 is wound to form an incomplete circle, the number of the positive electrode tabs 2231 of the positive electrode winding middle section 22331 may be an odd number. For convenience of illustration in the figure, other positive electrode tabs 2231 on the positive electrode winding middle section 22331 except the first positive electrode tab 2231a are defined as second positive electrode tabs 2231b.

In some embodiments, as shown in Fig. 6, one positive electrode tab 2231 may be arranged in each circle of the positive electrode winding middle section 22331, and the electrode tab is the first positive electrode tab 2231a.

Because binding force of a negative electrode winding finishing section 2243 and the positive electrode winding finishing section 22332 is relatively small, after the electrode assembly is repeatedly expanded and contracted, the distance between the positive electrode winding finishing section 22332 and the corresponding negative electrode winding finishing section 2243 is large relative to the distance between other circles, which is prone to causing that ions of the positive electrode winding finishing section 22332 fail to reach the negative electrode winding finishing section 2243, resulting in lithium plating.

Based on this, referring to Fig. 6 , in some embodiments, the positive electrode winding extension section 2233 includes the positive electrode winding middle section 22331 and the positive electrode winding finishing section 22332, the positive electrode winding middle section 22331 is connected between the positive electrode winding starting section 2232 and the positive electrode winding finishing section 22332, the positive electrode winding finishing section 22332 is wound at least one circle, and one positive electrode tab 2231 (a third positive electrode tab 2231c in Fig. 6) is arranged on each circle of the positive electrode winding finishing section 22332, so that the internal resistance of the positive electrode winding finishing section 22332 is small, and it is capable of increasing the difficulty of ion separation from the positive electrode winding finishing section 22332, thereby reducing the number of ions separated from the positive electrode winding finishing section 22332 and lowering the risk of lithium plating of the electrode assembly 22. For convenience of illustration in the figure, the positive electrode tab 2231 of the positive electrode winding middle section 22331 is defined as the second positive electrode tab 2231b, and the positive electrode tab 2231 of the positive electrode winding finishing section 22332 is defined as the third positive electrode tab 2231c.

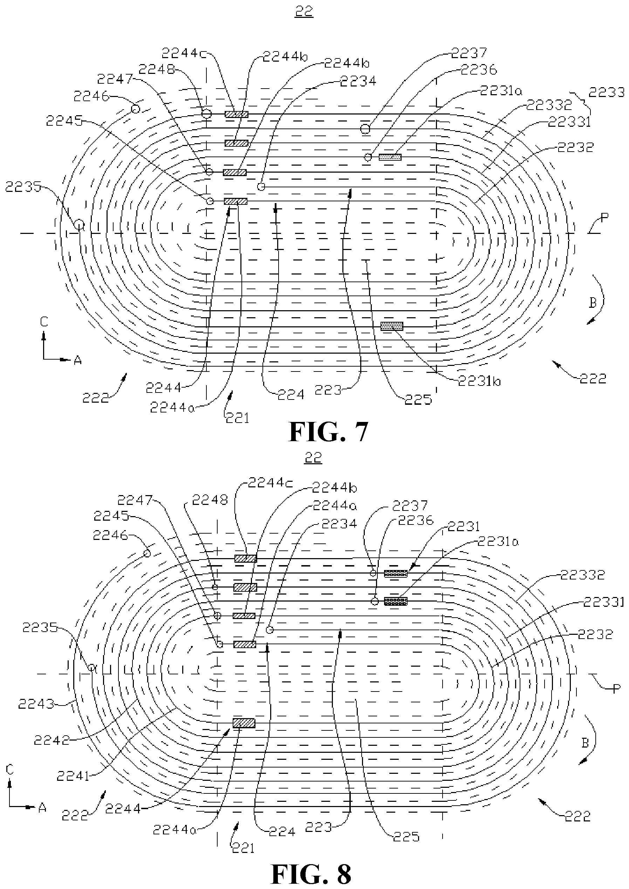

Of course, as shown in Fig. 7, in some embodiments, the positive electrode winding finishing section 22332 is not provided with the positive electrode tabs 2231. It can also increase the internal resistance of the positive electrode winding finishing section 22332, thereby increasing the difficulty of ion separation from the positive electrode winding finishing section 22332, and lowering the possibility of lithium plating of the electrode assembly 22.

Based on this, as shown in Fig. 8 , in some embodiments, the positive electrode winding extension section 2233 includes the positive electrode winding middle section 22331 and the positive electrode winding finishing section 22332; and the wound electrode assembly 22 further includes a negative electrode sheet 224, the negative electrode sheet 224 includes a negative electrode winding starting section 2241 arranged corresponding to the positive electrode winding starting section 2232, a negative electrode winding middle section 2242 arranged corresponding to the positive electrode winding middle section 22331, and a negative electrode winding finishing section 2243 arranged corresponding to the positive electrode winding finishing section 22332. The negative electrode winding starting section 2241 is wound at least one circle, and one negative electrode tab 2244 is arranged on each layer of the negative electrode winding starting section 2241 in each circle. One negative electrode tab 2244 is arranged on each layer of each circle of the negative electrode winding starting section 2241, so that the internal resistance of the negative electrode winding finishing section 2243 is reduced, the ion receiving capability of the negative electrode winding starting section 2241 is capable of being improved, and the risk of lithium plating of the electrode assembly 22 is lowered. In other words, the internal resistance of at least the negative electrode sheet 224 of the innermost circle is small, which is capable of improving the ion receiving capability of the negative electrode sheet 224 of the innermost circle and lower the risk of lithium plating of the electrode assembly 22. For the convenience of illustration in the figure, the negative electrode tab 2244 of the negative electrode winding starting section 2241 is defined as a first negative electrode tab 2244a, the negative electrode tab 2244 of the negative electrode winding middle section 2242 is defined as a second negative electrode tab 2244b, and the negative electrode tab 2244 of the negative electrode winding finishing section 2243 is defined as a third negative electrode tab 2244c.

Corresponding arrangement of the positive electrode winding starting section 2232 and the negative electrode winding starting section 2241 means that the positive electrode winding starting section 2232 corresponds to the negative electrode sheet 224 on the inner side thereof, and corresponding arrangement of the positive electrode winding finishing section 22332 and the negative electrode winding finishing section 2243 means that the negative electrode winding finishing section 2243 corresponds to the positive electrode sheet 223 on the inner side thereof.

The negative electrode sheet 224 has a negative electrode start end 2245 and a negative electrode winding finish end 2246, the negative electrode start end 2245 is the starting position of winding of the negative electrode sheet 224, the negative electrode start end 2245 is located at the negative electrode winding starting section 2241, the negative electrode winding finish end 2246 is the ending position of winding of the negative electrode sheet 224, and the negative electrode winding finish end 2246 is located at the negative electrode winding finishing section 2243. After negative electrode winding is completed, the negative electrode winding starting section 2241 is closer to the winding center axis than the negative electrode winding middle section 2242 and the negative electrode winding finishing section 2243. The negative electrode winding starting section also has a fifth connection end, the negative electrode winding finishing section 2243 also has a sixth connection end, the negative electrode winding middle section 2242 also has a seventh connection end and an eighth connecting end, the fifth connection end of the negative electrode winding starting section is connected with the seventh connection end of the negative electrode winding middle section 2242 to form a third connection position 2247 of the negative electrode sheet 224, and the negative electrode winding finishing section is connected with the eighth connection end of the negative electrode winding middle section 2242 through the sixth connection end to form a fourth connection position 2248 of the negative electrode sheet 224.

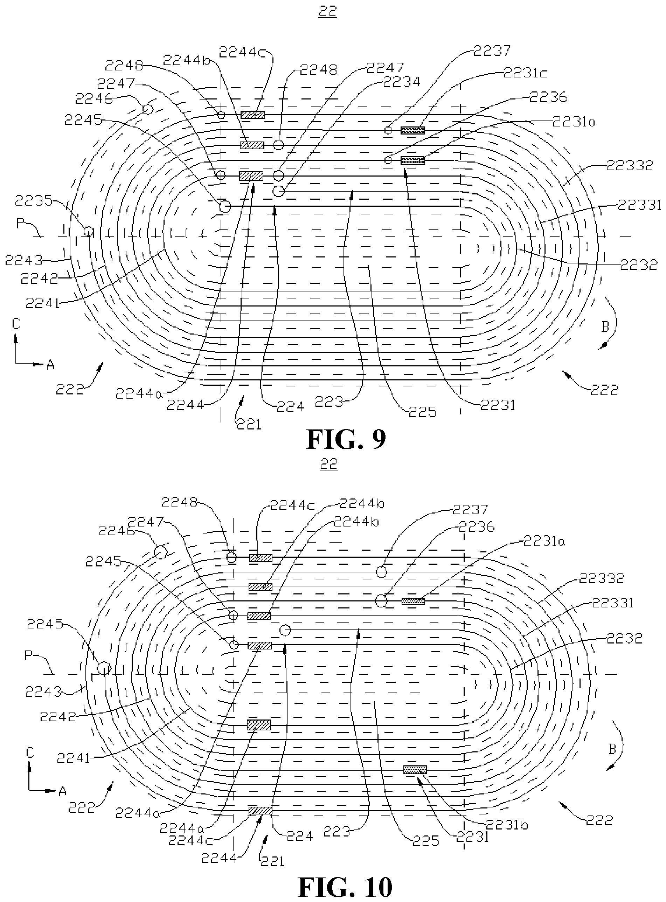

As shown in Fig. 9, in some embodiments, one negative electrode tab 2244 is arranged on each circle of the negative electrode winding starting section 2241. In other embodiments, the negative electrode tabs 2244 on the negative electrode winding starting section 2241 may also be arranged in other manners.

Since the positive electrode winding starting section 2232 is not provided with the positive electrode tabs 2231, along the winding direction B, the first tab of the electrode assembly 22 is the first negative electrode tab 2244 located on the negative electrode winding starting section 2241.

Continuing to refer to Fig. 9, in some embodiments, the negative electrode winding middle section 2242 is wound multiple circles, and one negative electrode tab 2244 (the second negative electrode tab 2244b in Fig. 9) is arranged on each circle of the negative electrode winding middle section 2242, which is capable of improving the ion receiving capability of the negative electrode winding middle section 2242 and lower the risk of lithium plating of the electrode assembly 22. In other embodiments, the negative electrode winding middle section 2242 may also be provided with one negative electrode tab 2244 (the second negative electrode tab 2244b in Fig. 9) on each layer of each circle.

Continuing to refer to Fig. 9, in some embodiments, the negative electrode winding finishing section 2243 is wound at least one circle, one negative electrode tab 2244 (the third negative electrode tab 2244c in Fig. 9) is arranged on each circle of the negative electrode winding finishing section 2243, which is capable of improving the ion receiving capability of the negative electrode winding starting section 2241 and lower the risk of lithium plating of the electrode assembly 22. In other embodiments, the negative electrode winding finishing section 2243 may also be provided with one negative electrode tab 2244 on each layer of each circle.

As shown in Fig. 10, in some embodiments, the negative electrode winding starting section 2241 is wound at least one circle, and one negative electrode tab 2244 (the first negative electrode tab 2244a in Fig. 10) is arranged on each layer of the negative electrode winding starting section 2241 in each circle. The negative electrode winding middle section 2242 is wound at least one circle, and one negative electrode tab 2244 (the second negative electrode tab 2244b in Fig. 10) is arranged on each circle of the negative electrode winding middle section 2242. The negative electrode winding finishing section 2243 is wound at least one circle, and one negative electrode tab 2244 (the third negative electrode tab 2244c in Fig. 10) is arranged on each layer of the negative electrode winding finishing section 2243 in each circle. The distance between the negative electrode winding finishing section 2243 and the positive electrode winding finishing section 22332 is large relative to the distance between other circles, which is prone to causing that ions in the positive electrode winding finishing section 22332 fail to reach the negative electrode winding finishing section 2243, resulting in lithium plating. One negative electrode tab 2244 is arranged on each layer of the negative electrode winding finishing section 2243 in each circle, so that the internal resistance of the negative electrode winding finishing section 2243 is small, which is capable of improving the ion receiving capability of the negative electrode winding middle section and lower the risk of lithium plating of the electrode assembly 22. The positive electrode winding starting section 2232 is not provided with the positive electrode tabs 2231, one positive electrode tab (the first positive electrode tab 2231a and the second positive electrode tab 2231b in Fig. 10) is arranged on each layer of each circle of the positive electrode winding middle section, and the positive electrode winding finishing section 22332 is not provided with positive electrode tabs 2231.

In some embodiments, the electrode assembly 22 further includes a separator 225, and the separator 225 is configured to separate the positive electrode sheet 223 from the negative electrode sheet 224 to avoid short circuit caused by direct contact between the positive electrode sheet 223 and the negative electrode sheet 224.

In some embodiments, the length of the positive electrode winding starting section 2232 accounts for 5%-30% of the total length of the positive electrode sheet 223. When the length of the positive electrode winding starting section 2232 is less than 5% of the total length, the increase of the internal resistance of the positive electrode winding starting section 2232 is not obvious, the voltage corresponding to the positive electrode winding starting section 2232 cannot be significantly reduced, and the problem of lithium plating in the bending portions 222 of the electrode assembly 22 cannot be significantly improved. When the length of the positive electrode winding starting section 2232 accounts for 30% of the total length of the positive electrode sheet 223, the temperature rise of the first positive electrode tab 2231 along the winding direction B of the positive electrode sheet 223 will be too large, causing other risks such as thermal runaway.

It should be noted that the total length of the positive electrode sheet 223 refers to a dimension of the portion of the positive electrode sheet 223 from the positive electrode start end 2234 to the positive electrode winding finish end 2235 along the winding direction B. The length of the positive electrode winding starting section 2232 refers to a dimension of the portion of the positive electrode sheet 223 from the positive electrode start end 2234 to the first positive electrode tab 2231a along the winding direction B.

In some embodiments, the length of the positive electrode winding starting section 2232 accounts for 10%-25% of the total length of the positive electrode sheet 223, which can not only significantly relieve the lithium plating problem of the electrode assembly 22, but also reduce the risk that the temperature rise of the first positive electrode tab 2231 along the winding direction B of the positive electrode sheet 223 is too large.

In some embodiments, the length of the positive electrode winding starting section 2232 accounts for 15%-20% of the total length of the positive electrode sheet 223, which can not only significantly relieve the lithium plating problem of the electrode assembly 22, but also reduce the risk that the temperature rise of the first positive electrode tab 2231 along the winding direction B of the positive electrode sheet 223 is too large. The positive electrode winding extension section 2233 provided with the positive electrode tabs 2231 is also capable of being made to have a suitable length, and a suitable number of positive electrode tabs 2231 is capable of being provided to ensure a flow area.

In some embodiments, the positive electrode winding extension section 2233 is provided with a plurality of positive electrode tabs 2231, from the positive electrode winding start end to the positive electrode winding finish end 2235, and the area of the first positive electrode tab 2231 of the positive electrode winding extension section 2233 is larger than the area of the remaining positive electrode tabs 2231 of the positive electrode winding extension section 2233. In other words, along the winding direction B, the area of the first positive electrode tab 2231a is larger than the area of the other positive electrode tabs 2231 except the first positive electrode tab 2231a among the plurality of positive electrode tabs 2231. Along the winding direction B, the first positive electrode tab of the positive electrode winding extension section 2233 will withstand the temperature rise caused by the positive electrode winding starting section 2232, and the area of the first positive electrode tab 2231 of the positive electrode winding extension section 2233 being larger than the area of the remaining positive electrode tabs 2231 of the positive electrode winding extension section 2233 is capable of effectively reducing the temperature rise of the positive electrode winding starting section 2232 and ensure the consistency of the temperature rise of the positive electrode winding starting section 2232 and the positive electrode winding extension section 2233 as much as possible.

The remaining positive electrode tabs 2231 refer to other positive electrode tabs 2231 except the first positive electrode tab 2231.

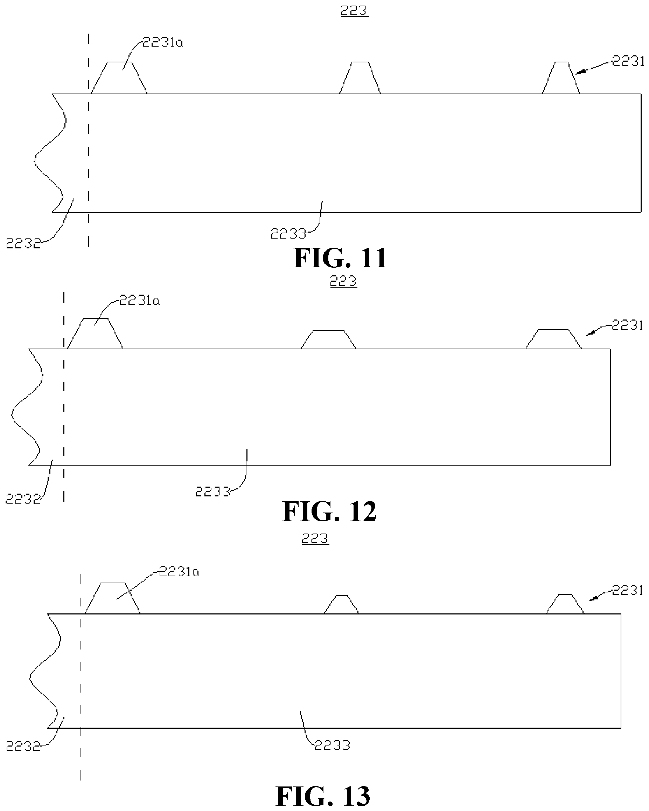

As shown in Fig. 11, in some embodiments, the width dimension of the first positive electrode tab 2231a is greater than the width dimension of the remaining positive electrode tabs 2231, and the height dimension of the first positive electrode tab 2231a is equal to the height dimension of the remaining positive electrode tabs 2231, so that the area of the first positive electrode tab 2231a is larger than the area of the remaining positive electrode tabs 2231. The width dimension of the positive electrode tab 2231 is the dimension along the winding direction B of the positive electrode tab 2231, and the height dimension of the positive electrode tab 2231 is the dimension along the width direction of the positive electrode sheet 223.

As shown in Fig. 12, in some embodiments, the height dimension of the first positive electrode tab 2231a is greater than the height dimension of the remaining positive electrode tabs 2231, and the width dimension of the first positive electrode tab 2231a is equal to the width dimension of the remaining positive electrode tabs 2231, so that the area of the first positive electrode tab 2231a is larger than the area of the remaining positive electrode tabs 2231.

As shown in Fig. 13, in some embodiments, the width dimension of the first positive electrode tab 2231a is greater than the width dimension of the remaining positive electrode tabs 2231, and the height dimension of the first positive electrode tab 2231a is greater than the height dimension of the remaining positive electrode tabs 2231, so that the area of the first positive electrode tab 2231a is larger than the area of the remaining positive electrode tabs 2231.

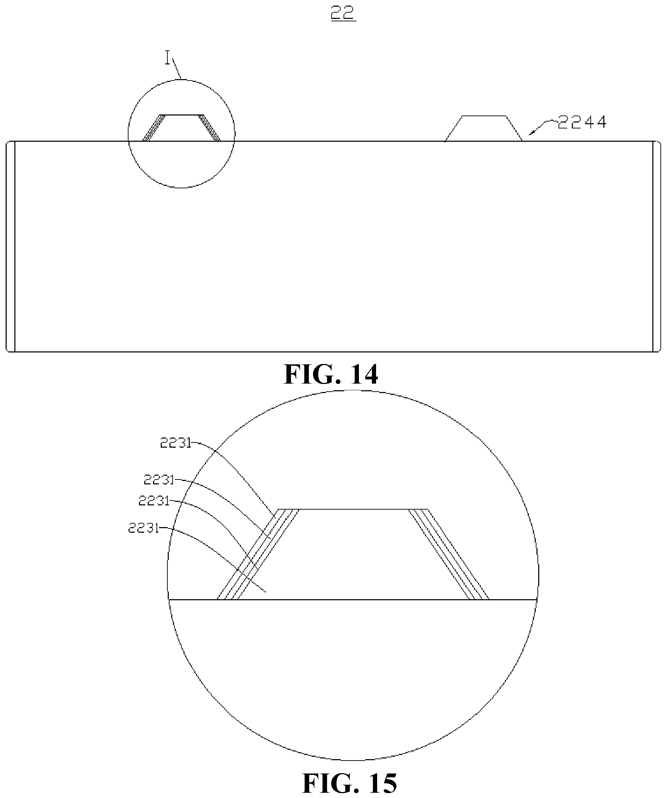

The areas of the remaining positive electrode tabs 2231 may or may not be equal. In some embodiments, along the winding direction B, the areas of the remaining positive electrode tabs 2231 gradually decrease. That is, from the positive electrode start end 2234 to the positive electrode winding finish end 2235 (i.e., along the winding direction B), the areas of the plurality of positive electrode tabs 2231 gradually decrease, after such positive electrode sheet 223 is wound, as shown in Fig. 14 and Fig. 15, the positive electrode tabs 2231 are arranged in a laminated manner, and since the areas of the plurality of positive electrode tabs 2231 gradually decrease, the plurality of positive electrode tabs 2231 will not completely overlap, but are staggered in the width direction of the positive electrode tabs 2231, so that each positive electrode tab 2231 has an exposed area, thereby improving the heat dissipation capability of the positive electrode tabs 2231.

In some embodiments, the wound electrode assembly 22 further includes the negative electrode sheet 224, and the areas of the positive electrode tabs 2231 are larger than the areas of the negative electrode tabs 2244 of the negative electrode sheet 224. Since the positive electrode winding starting section 2232 is not provided with the positive electrode tabs 2231, the temperature rise of the positive electrode sheet 223 will be greater than that of the negative electrode sheet 224, the heat dissipation capability of the positive electrode sheet 223 is smaller than that of the negative electrode sheet 224, and the areas of the positive electrode tabs 2231 of the positive electrode sheet 223 are larger than the areas of the negative electrode tabs 2244 of the negative electrode sheet 224, which is capable of effectively reducing the temperature rise of the positive electrode sheet 223 and effectively improve the heat dissipation capability of the positive electrode sheet 223.

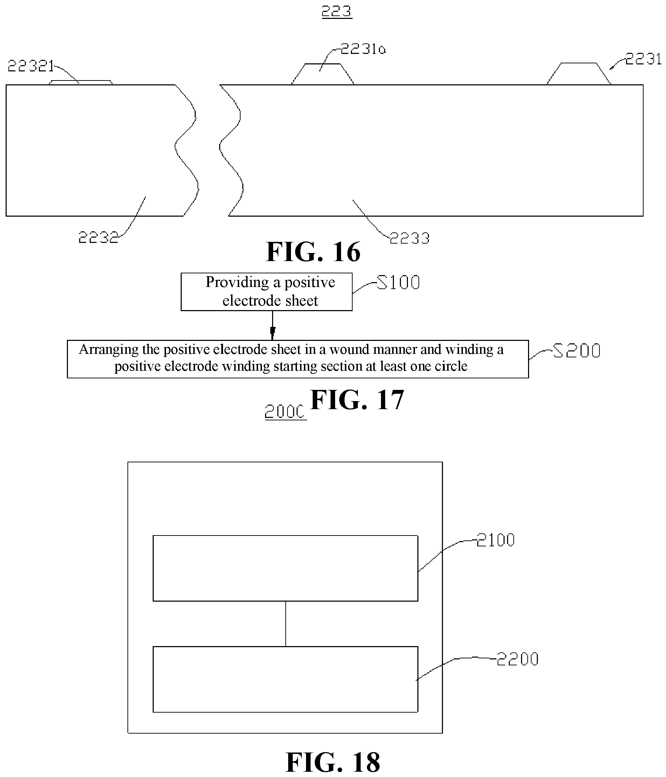

As shown in Fig. 16, in some embodiments, the positive electrode winding starting section 2232 is provided with a heat dissipation structure 22321. Since the positive electrode winding starting section 2232 is not provided with the positive electrode tabs 2231, the internal resistance of the positive electrode winding starting section 2232 is larger than that in the case where the positive electrode winding starting section 2232 is provided with the positive electrode tabs 2231, the temperature rise of the positive electrode winding starting section 2232 is relatively large, and the arrangement of the heat dissipation structure 22321 in the positive electrode winding starting section 2232 is capable of improving the heat dissipation capability of the positive electrode winding starting section 2232.

The heat dissipation structure 22321 is arranged on the positive electrode winding starting section 2232 and connected to at least one side of the width direction of a current collector coated with an active material layer of the positive electrode sheet 223. The heat dissipation structure 22321 is protrusions protruding from the active material layer, the height dimension of the heat dissipation structure 22321 is smaller than the height dimension of the positive electrode tabs 2231, and the heat dissipation structure 22321 is not connected to an adapter (not shown in the figure) and does not participate in overcurrent, and is only electrically connected with the adapter (not shown in the figure) or electrode terminals through the positive electrode tabs 2231 to draw currents out.

In some embodiments, the negative electrode winding starting section 2241 may also be provided with a heat dissipation structure 22321, and the structure of the heat dissipation structure 22321 of the negative electrode winding starting section 2241 may refer to the heat dissipation structure 22321 on the positive electrode winding starting section 2232.

In some embodiments, the wound electrode assembly 22 further includes the negative electrode sheet 224, and the number of the positive electrode tabs 2231 of the positive electrode sheet 223 is less than the number of the negative electrode tabs 2244 of the negative electrode sheet 224. The total number of the negative electrode tabs 2244 is greater than the total number of the positive electrode tabs 2231, so the internal resistance of the negative electrode sheet 224 is smaller than that of the positive electrode sheet 223, ensuring that the ion receiving capability of the negative electrode sheet 224 is capable of being better than the ion separation capability of the positive electrode, and thus be capable of more effectively relieving the lithium plating problem.

It should be noted that, in the embodiments of the present application, for the convenience of showing the positive electrode tabs 2231 and the negative electrode tabs 2244 in the figures, the positive electrode tabs 2231 exceed the positive electrode sheet 223 in the thickness direction C of the electrode assembly, and the negative electrode tabs 2244 exceed the negative electrode sheet 224 in the thickness direction C of the electrode assembly, but this is not limitations of the dimensions of the positive electrode tabs 2231 and the negative electrode tabs 2244 in the thickness direction C of the electrode assembly.

As shown in Fig. 17, an embodiment of the present application provides a manufacturing method of a wound electrode assembly 22, including:
step S100, providing a positive electrode sheet 223, the positive electrode sheet 223 including a positive electrode winding starting section 2232 not provided with positive electrode tabs 2231 and a positive electrode winding extension section 2233 provided with the positive electrode tabs 2231, wherein the positive electrode winding starting section and the positive electrode winding extension section are connected; and
step S200, arranging the positive electrode sheet 223 in a wound manner and winding the positive electrode winding starting section 2232 at least one circle.

The positive electrode winding starting section 2232 is not provided with the positive electrode tabs 2231, after the positive electrode sheet 223 is wound to form the electrode assembly 22, it is equivalent to increasing the internal resistance corresponding to the positive electrode winding starting section 2232, such that the difficulty that ions are separated from the positive electrode winding starting section 2232 is increased, the number of ions separated from the positive electrode winding starting section 2232 is reduced, and the possibility of lithium plating of the electrode assembly 22 is lowered.

As shown in Fig. 18, an embodiment of the present application provides a manufacturing apparatus 2000 of a wound electrode assembly, the manufacturing apparatus 2000 of the wound electrode assembly including a providing device 2100 and an assembling device 2200. The providing device 2100 is configured to provide a positive electrode sheet 223, the positive electrode sheet 223 including a positive electrode winding starting section 2232 not provided with positive electrode tabs 2231 and a positive electrode winding extension section 2233 provided with the positive electrode tabs 2231, wherein the positive electrode winding starting section and the positive electrode winding extension section are connected; and the assembling device 2200 is configured to wind the positive electrode sheet 223 and wind the positive electrode winding starting section 2232 at least one circle.

The positive electrode winding starting section 2232 is not provided with the positive electrode tabs 2231, after the positive electrode sheet 223 is wound to form the electrode assembly 22, it is equivalent to increasing the internal resistance corresponding to the positive electrode winding starting section 2232, such that the difficulty that ions are separated from the positive electrode winding starting section 2232 is increased, the number of ions separated from the positive electrode winding starting section 2232 is reduced, and the possibility of lithium plating of the electrode assembly 22 is lowered.

The above are only preferred embodiments of the present application, and are not intended to limit the present application. For those skilled in the art, the present application may have various modifications and changes. Any modifications, equivalent replacements, improvements, etc. made within the spirit and principle of the present application shall fall within the scope of protection of the present application.

## Claims

1. A wound electrode assembly, comprising a positive electrode sheet; wherein
the positive electrode sheet comprises a positive electrode winding starting section not provided with positive electrode tabs and a positive electrode winding extension section provided with the positive electrode tabs, wherein the positive electrode winding starting section and the positive electrode winding extension section are connected; and
the positive electrode winding starting section is wound at least one circle.

2. The wound electrode assembly according to claim 1, wherein a length of the positive electrode winding starting section accounts for 5%-30% of a total length of the positive electrode sheet;
optionally, the length of the positive electrode winding starting section accounts for 10%-25% of the total length of the positive electrode sheet; and
optionally, the length of the positive electrode winding starting section accounts for 15%-20% of the total length of the positive electrode sheet.

3. The wound electrode assembly according to claim 1, wherein the positive electrode winding extension section is provided with the plurality of positive electrode tabs, from a positive electrode winding start end to a positive electrode winding finish end, and an area of the first positive electrode tab of the positive electrode winding extension section is larger than an area of the remaining positive electrode tabs of the positive electrode winding extension section.

4. The wound electrode assembly according to claim 3, wherein from the positive electrode winding start end to the positive electrode winding finish end, the areas of the plurality of the positive electrode tabs gradually decrease.

5. The wound electrode assembly according to any one of claims 1-4, wherein the wound electrode assembly further comprises a negative electrode sheet, and the areas of the positive electrode tabs are larger than areas of negative electrode tabs of the negative electrode sheet.

6. The wound electrode assembly according to any one of claims 1-5, wherein the positive electrode winding extension section comprises a positive electrode winding middle section and a positive electrode winding finishing section, the positive electrode winding middle section is connected between the positive electrode winding starting section and the positive electrode winding finishing section, the positive electrode winding middle section is wound at least one circle, and one positive electrode tab is arranged on each layer of the positive electrode winding middle section in each circle.

7. The wound electrode assembly according to any one of claims 1-6, wherein the positive electrode winding extension section comprises the positive electrode winding middle section and the positive electrode winding finishing section, the positive electrode winding middle section is connected between the positive electrode winding starting section and the positive electrode winding finishing section, the positive electrode winding finishing section is wound at least one circle, and one positive electrode tab is arranged on each circle of the positive electrode winding finishing section, or the positive electrode winding finishing section is not provided with the positive electrode tabs.

8. The wound electrode assembly according to any one of claims 1-7, wherein the wound electrode assembly further comprises the negative electrode sheet, and the number of the positive electrode tabs of the positive electrode sheet is less than the number of the negative electrode tabs of the negative electrode sheet.

9. The wound electrode assembly according to any one of claims 1-8, wherein the positive electrode winding extension section comprises a positive electrode winding middle section and a positive electrode winding finishing section;
the wound electrode assembly further comprises the negative electrode sheet, the negative electrode sheet comprises a negative electrode winding starting section arranged corresponding to the positive electrode winding starting section, a negative electrode winding middle section arranged corresponding to the positive electrode winding middle section, and a negative electrode winding finishing section arranged corresponding to the positive electrode winding finishing section;
the negative electrode winding starting section is wound at least one circle, and one negative electrode tab is arranged on each layer of the negative electrode winding starting section in each circle; and/or,
the negative electrode winding middle section is wound a plurality of circles, and one negative electrode tab is arranged on each circle of the negative electrode winding middle section; and/or,
the negative electrode winding finishing section is wound at least one circle, and one negative electrode tab is arranged on each circle of the negative electrode winding finishing section.

10. The wound electrode assembly according to any one of claims 1-9, wherein the positive electrode winding starting section is provided with a heat dissipation structure.

11. A battery cell, comprising:
a shell having an accommodating cavity; and
the wound electrode assembly according to any one of claims 1-10, wherein the wound electrode assembly is accommodated in the accommodating cavity.

12. A battery, comprising:
a box body; and
the battery cell according to claim 11, wherein the battery cell is accommodated in the box body.

13. An electrical device, comprising the battery cell according to claim 11.

14. A manufacturing method of a wound electrode assembly, comprising:
providing a positive electrode sheet, the positive electrode sheet comprising a positive electrode winding starting section not provided with positive electrode tabs and a positive electrode winding extension section provided with the positive electrode tabs, wherein the positive electrode winding starting section and the positive electrode winding extension section are connected; and
arranging the positive electrode sheet in a wound manner and winding the positive electrode winding starting section at least one circle.

15. A manufacturing apparatus of a wound electrode assembly, comprising:
a providing device, configured to provide a positive electrode sheet, the positive electrode sheet comprising a positive electrode winding starting section not provided with positive electrode tabs and a positive electrode winding extension section provided with the positive electrode tabs, wherein the positive electrode winding starting section and the positive electrode winding extension section are connected; and
an assembling device, configured to wind the positive electrode sheet and wind the positive electrode winding starting section at least one circle.
